# EUROPÄISCHE PATENTSCHRIFT

(11) **EP 3 356 116 B1**
(45) Veröffentlichungstag und Bekanntmachung des Hinweises auf die Patenterteilung: **30.09.2020**
(21) Anmeldenummer: 16806054.9
(22) Anmeldetag: 02.12.2016
(51) Int. Cl.: B29C 53/08, F02M 55/00, F02M 55/02

(54) **KOMPONENTE FÜR BRENNSTOFFEINSPRITZANLAGE UND VERFAHREN ZUM HERSTELLEN EINER KOMPONENTE EINER BRENNSTOFFEINSPRITZANLAGE**
FUEL INJECTION SYSTEM COMPONENT AND METHOD FOR THE PRODUCTION OF A FUEL INJECTION INJECTION SYSTEM COMPONENT
COMPOSANT D'UN SYSTÈME À INJECTION DE CARBURANT ET PROCÉDÉ DE PRÉPARATION D'UN COMPOSANT D'UN SYSTÈME À INJECTION DE CARBURANT

(30) Priorität: 29.12.2015 DE 102015226807
(43) Veröffentlichungstag der Anmeldung: 08.08.2018
(73) Patentinhaber: Robert Bosch GmbH, 70442 Stuttgart (DE)
(72) Erfinder: SEIFERT, John, Kalkaska, Michigan 49646 (US); NUSSBAECHER, Waldemar, 71640 Ludwigsburg (DE); DIMITROV, Atanas, 71665 Vaihingen/Enz (DE); LANG, Klaus, 70439 Stuttgart (DE); REHWALD, Andreas, 74321 Bietigheim-Bissingen (DE)
(86) Internationale Anmeldenummer: PCT/EP2016/079580
(87) Internationale Veröffentlichungsnummer: WO 2017/114636

(56) Entgegenhaltungen:
- WO-A1-2012/167881
- JP-A- S6 179 619
- US-A1- 2004 101 416

## Beschreibung

### Stand der Technik

Die Erfindung betrifft eine Komponente für eine Brennstoffeinspritzanlage, insbesondere eine Hochdruck-Brennstoffeinspritzanlage, ein Verfahren zum Herstellen einer Komponente einer Brennstoffeinspritzanlage, insbesondere einer Hochdruck-Brennstoffeinspritzanlage, und eine Komponente, die mit solch einem Verfahren hergestellt ist. Speziell betrifft die Erfindung das Gebiet der Brennstoffeinspritzanlagen von Kraftfahrzeugen, bei denen beispielsweise über einen Brennstoffverteiler ein unter hohem Druck stehender Brennstoff auf mehrere Injektoren aufgeteilt und von diesen vorzugsweise direkt in Brennräume einer Brennkraftmaschine eingespritzt wird.

Aus der DE 101 23 234 A1 und der WO2012167881 A1 ist ein Kraftstoffhochdruckspeicher mit optimierter Geometrie bekannt. Der bekannte Kraftstoffhochdruckspeicher weist einen hohlen Grundkörper auf, der mit mehreren Anschlussöffnungen ausgestattet ist. Um die Hochdruckfestigkeit des Kraftstoffhochdruckspeichers zu erhöhen, weist ein Speicherraum des Grundkörpers einen zylindrischen, elliptischen oder polygonen Querschnitt auf, wobei der Grundkörper im Querschnitt eine zylindrische, elliptische oder polygone Außenkontur aufweist.

### Offenbarung der Erfindung

Die erfindungsgemäße Komponente mit den Merkmalen des Anspruchs 1, das Verfahren mit den Merkmalen des Anspruchs 9 und die Komponente, die gemäß dem Verfahren nach Anspruch 9 hergestellt ist, haben den Vorteil, dass eine verbesserte Ausgestaltung und Funktionsweise ermöglicht sind. Insbesondere können eine Festigkeit oder Widerstandsfähigkeit verbessert und über die Lebensdauer erhalten werden.

Durch die in den Unteransprüchen aufgeführten Maßnahmen sind vorteilhafte Weiterbildungen der im Anspruch 1 angegebenen Komponente, des im Anspruch 9 angegebenen Verfahrens und der im Anspruch 10 angegebenen Komponente möglich.

Bei einer Brennstoffeinspritzanlage können ein Brennstoffverteiler, insbesondere eine rohrförmige Brennstoffverteilerleiste, eine ein- oder mehrteilige Verrohrung, die den Brennstoffverteiler einerseits mit zumindest einer Pumpe und andererseits mit in der Regel mehreren Brennstoffeinspritzventilen verbindet, vorgesehen sein. Je nach Ausgestaltung der Brennstoffeinspritzanlage können auch zwei und prinzipiell auch mehr Brennstoffverteiler vorgesehen sein, die ebenfalls miteinander verbunden sein können. Unter anderem aufgrund der begrenzten Bauraumverhältnisse in einem Motorraum kann es vorkommen, dass solche Komponenten, wie die oder Teile der Verrohrung oder ein rohrförmiger Brennstoffverteiler, ein oder mehrfach in einer oder mehreren Richtungen mit einem oder mehreren unterschiedlichen Biegewinkeln gebogen wird. Ein rohrförmiger Grundkörper der Komponente, an dem solch eine Biegung stattfindet, erfährt beim Biegen auch eine Verformung seines Querschnitts im Bereich der Biegung. Beispielsweise würde ein rohrförmiger Grundkörper mit umfänglich konstanter Wandstärke nach dem Biegen einen ovalen Querschnitt aufweisen, der durch plastische Verformungen des Materials aufgrund der beim Biegen wirkenden Zug- und Druckkräfte entsteht. Generell besteht hierbei das Problem, dass durch die Biegung eine Ermüdung des Werkstoffs auftritt und die Steifigkeit abnimmt. Die plastische Deformation des mehr oder weniger ideal runden Querschnitts hin zu einem ovalen Querschnitt mit über dem Umfang nicht konstanter Wandstärke führt zu einer örtlichen Minderung der Belastbarkeit des rohrförmigen Bauteils. Die im Betrieb auftretenden Belastungen, die beispielsweise durch den hydraulischen Druck oder mechanische Schwingungen verursacht sind, bedingen über die Lebensdauer eine Bauteilalterung und es besteht die Gefahr, dass die durch das Biegen verursachte geringere Festigkeit eine frühzeitigen Ausfall oder zumindest eine reduzierte Lebensdauer bedingt.

Ein größerer Materialeinsatz zur Kompensation von Festigkeitsverlusten ist nicht immer praktikabel und verursacht stets höhere Materialkosten. Eine Optimierung kann daher darin bestehen, dass bei gegebenem Materialeinsatz die nach dem Biegen erzielte Festigkeit optimiert ist. Insbesondere kann sich dies auf die Querschnitte des rohrförmigen Abschnitts beziehen, was eine Optimierung der Wandstärke über den Umfang bedeutet. Bei dem für den Grundkörper zum Einsatz kommenden Material kann es sich beispielsweise um einen rostfreien austenitischen Stahl handeln. Daraus können auch zur Abdichtung dienende Anschlussteile ausgebildet sein, um eine hohe Korrosionsbeständigkeit zu erzielen. Es können aber auch andere Werkstoffe zum Einsatz kommen, insbesondere nicht rostfreie Stähle, die mit einer Antikorrosionsbeschichtung beschichtet sind.

Im Hinblick auf eine zur Optimierung stehende Ausgangsgeometrie kann beispielsweise eine Leitung als Teil einer Verrohrung dienen, die bei einem kreisförmigen Querschnitt einen Außendurchmesser zwischen 4 mm und 10 mm sowie eine Wandstärke zwischen 1 mm und 2,5 mm hat. Solch eine Leitung ist besonders zum Führen von Brennstoff bei Brennkraftmaschinen geeignet.

Auch wenn die Ausgestaltung der Komponente mit einer optimierten Geometrie besonders für Hochdruck-Brennstoffeinspritzanlagen geeignet ist, so kann die Optimierung allgemein bei Hoch- und Niederdrucksystemen für Benzin, Diesel oder andere Brennstoffe zum Einsatz kommen, um die Festigkeit zu optimieren und um die Funktionsfähigkeit über die Lebensdauer aufrechtzuerhalten. Speziell können im Hinblick auf die im Betrieb auftretenden Belastungen, wie den Druck und die mechanischen Erschütterungen, Werkstoffermüdungen über die Lebensdauer reduziert werden, so dass das Auftreten von Rissen oder dergleichen verhindert ist.

Ein möglicher Ausgangszustand des Grundkörpers vor dem Biegen ist durch eine geometrische Ausgestaltung des Grundkörpers gegeben, bei der sich der Grundkörper geradlinig erstreckt und die Längslinie des rohrförmigen Abschnitts geradlinig verläuft. In ein oder mehreren Abschnitten kann dann ein Biegen des Grundkörpers erfolgen. In den rohrförmigen Abschnitten ist die Querschnittsgeometrie des Grundkörpers so optimiert, dass in Bezug auf die noch erfolgende, aber bereits festgelegte beziehungsweise vorgegebene Längsbiegung die reduzierte Ovalität der Querschnitte des rohrförmigen Abschnitts an der Längsbiegung beziehungsweise eine entsprechend begrenzte Ovalität erzielt ist. Dies bedingt im Ausgangszustand eine über den Umfang asymmetrische Festlegung der Wandstärke des Grundkörpers. Randbedingungen dieser Optimierung sind der gewünschte beziehungsweise vorgegebene Biegewinkel für die Längsbiegung sowie der über die einzelnen Querschnittsflächen beispielsweise flächenmäßig vorgegebene Materialeinsatz. Es ist allerdings auch eine volumenmäßige Optimierung des Materialeinsatzes möglich.

In vorteilhafter Weise hat der Querschnitt des Grundkörpers im Ausgangszustand entlang der Krümmungsrichtung der erfolgenden Längsbiegung ein maximales Außenmaß. Bei der Weiterbildung nach Anspruch 2 ergibt sich auch nach dem Biegen, also im Endzustand, in dem die Längsbiegung an dem Grundkörper ausgestaltet ist, ein maximales Außenmaß entlang der dortigen Krümmungsrichtung der Längsbiegung. Hierbei versteht es sich, dass sich die Krümmungsrichtung entsprechend für aufeinanderfolgende Querschnitte in der Regel stetig ändert. Diese Ausgestaltung hat den Vorteil, dass Stauchungen und Streckungen des Materials reduziert sind, um entsprechend die Materialschwächung zu begrenzen. Entsprechende Vorteile ergeben sich bei der Weiterbildung nach Anspruch 3.

Die Weiterbildung nach Anspruch 4 hat den Vorteil, dass die Beanspruchung des Materials beim Biegevorgang begrenzt bleibt. Eine zusätzliche Weiterbildung kann darin bestehen, dass bezüglich der Achse, entlang der der jeweilige Querschnitt ein maximales Außenmaß aufweist, und/oder bezüglich der Achse, entlang der der jeweilige Querschnitt ein minimales Außenmaß aufweist, eine axialsymmetrische Ausgestaltung für zumindest einen Teil der Querschnitte nach der erfolgten Längsbiegung erzielt ist. Hierbei versteht es sich, dass in Bezug auf Toleranzen des Grundkörpers und prozessbedingte Variationen geringe Abweichungen von einer idealsymmetrischen Ausgestaltung auftreten können. Dies gilt ebenfalls für die beispielsweise in den Ansprüchen 2 und 3 angegebenen Orientierungen und die im Anspruch 4 angegebene senkrechte Orientierung.

Die Weiterbildung nach Anspruch 5 stellt eine restriktivere Optimierung in Bezug auf die Ovalität der Querschnitte dar. Im Grenzfall kann bei gegebener Längsbiegung auch eine verschwindende Ovalität der Querschnitte erzielt werden, was einer kreisförmigen Kontur des Querschnitts entspricht.

Speziell bei einer im Anspruch 6 angegebenen Ausgestaltung ist die Optimierung besonders vorteilhaft, da für diese Ausgestaltungen die Reduzierung des beim Biegen möglichen Festigkeitsverlustes besonders kritisch ist. Somit können gerade bei solchen Ausgestaltungen besonders gute Verbesserungen der Festigkeit und damit der Gewährleistung der Funktionsfähigkeit über die Lebensdauer erzielt werden.

Die Weiterbildung nach Anspruch 7 ermöglicht eine Optimierung der Wandstärke in Bezug auf die erzielte Festigkeit und den Erhalt dieser über die Lebensdauer der Komponente.

Somit sind in den Ansprüchen 2 bis 8 mögliche Weiterbildungen angegeben, die sich auf die Komponente mit der bereits ausgestalteten Längsbiegung beziehen, wobei die Ovalität der Querschnitte des rohrförmigen Abschnitts an der oder den Längsbiegungen reduziert und/oder entsprechend begrenzt ist. Mögliche Weiterbildungen des im Anspruch 9 angegebenen Verfahrens können darin bestehen, dass diesbezügliche Modifikationen beziehungsweise Optimierungen an dem rohrförmigen Grundkörper im Ausgangszustand vorgenommen werden, um nach dem Biegen die reduzierte und/oder begrenzte Ovalität der Querschnitte des rohrförmigen Abschnitts an der Längsbiegung zu erzielen.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, und die in den Zeichnungen dargestellte Formel (1) näher erläutert. Es zeigen:
Fig. 1 einen rohrförmigen Grundkörper einer Komponente mit einer Längsbiegung entsprechend einer möglichen Ausgestaltung zur Erläuterung der Erfindung;
Fig. 2 einen Querschnitt des in Fig. 1 dargestellten rohrförmigen Grundkörpers mit der Längsbiegung entsprechend einer möglichen Ausgestaltung zur Erläuterung der Erfindung;
Formel (1) einer Definition einer Ovalität;
Fig. 3 einen Prozessablauf in einer schematischen Darstellung zur Erläuterung der Erfindung;
Fig. 4 einen Querschnitt des in Fig. 1 dargestellten rohrförmigen Grundkörpers entsprechend einer weiteren möglichen Ausgestaltung der Erfindung und
Fig. 5 einen Querschnitt des in Fig. 1 dargestellten rohrförmigen Grundkörpers entsprechend einer weiteren möglichen Ausgestaltung der Erfindung.

### Ausführungsformen der Erfindung

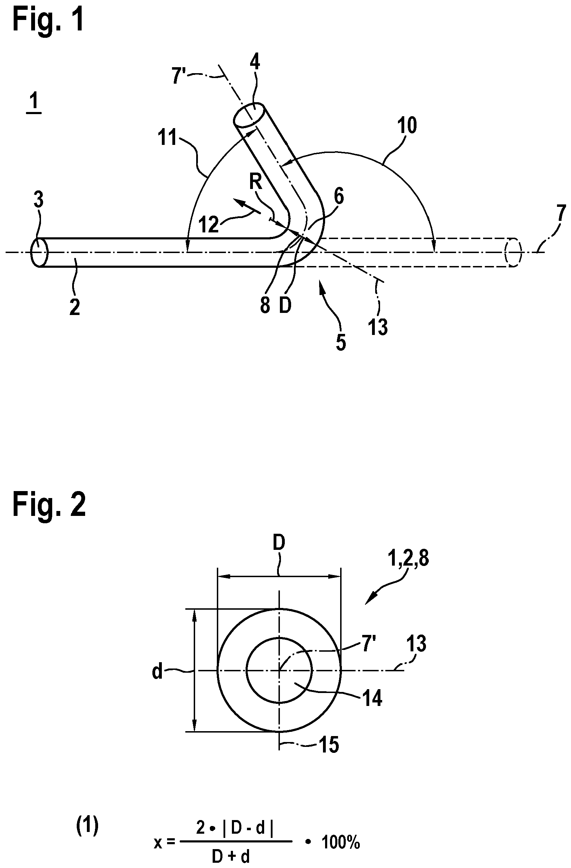

Fig. 1 zeigt eine Komponente 1 mit einem rohrförmigen Grundkörper 2 für eine Brennstoffeinspritzanlage. Die Komponente 1 kann hierbei insbesondere für eine Hochdruck-Brennstoffeinspritzanlage dienen. Bei einer abgewandelten Ausgestaltung kann der rohrförmige Grundkörper 2 auch nur abschnittsweise rohrförmig ausgestaltet sein. Insbesondere kann der rohrförmige Grundkörper 2 an einem seiner Enden 3, 4 verschlossen sein. Bei der Komponente 1 kann es sich insbesondere um eine Brennstoffleitung 1 handeln, wobei die Enden 3, 4 hierbei geöffnet sind. Bei der Komponente 1 kann es sich aber auch um einen Brennstoffverteiler 1 oder eine andere Komponente 1 für eine Brennstoffeinspritzanlage handeln.

Der rohrförmige Grundkörper 2 weist einen rohrförmigen Abschnitt 5 auf, an dem eine Längsbiegung 6 ausgestaltet ist.

In einem Ausgangszustand kann der rohrförmige Grundkörper 2 sich gerade erstrecken, wobei eine Längslinie 7 gerade verläuft. Nachdem die Längsbiegung 6 ausgestaltet ist, ergibt sich eine gebogene Längslinie 7'. Entlang der Längslinie 7' weist der rohrförmige Grundkörper 2 Querschnitte 8 auf, die von der Längslinie 7' senkrecht durchstößt. Hierbei ist exemplarisch ein Querschnitt 8 gekennzeichnet. Der Querschnitt 8 befindet sich hierbei an der Längsbiegung 6 des rohrförmigen Grundkörpers 2.

In diesem Ausführungsbeispiel ist ein Biegewinkel 10 vorgegeben und nach dem Biegen realisiert. Hierdurch ergibt sich ein Öffnungswinkel 11 der Längsbiegung 6 zwischen den beiden Schenkeln der gebogenen Längslinie 7'. Ferner ist ein Biegeradius R vorgegeben. Beispielsweise kann zum Biegen ein Zylinder mit dem Biegeradius R dienen, um den der rohrförmige Grundkörper 2 gebogen wird, um die Längsbiegung 6 herzustellen.

Allerdings ist nicht notwendigerweise eine einzige Krümmung für die Längsbiegung 6 vorgegeben. Eine Krümmung der Längsbiegung 6 kann auch entlang der Längslinie 7' variieren. Eine Krümmungsrichtung 12 gibt die gegebenenfalls lokale Richtung der Krümmung der Längslinie 7' an. Die Krümmungsrichtung 12 liegt hierbei in der Ebene des Querschnitts 8 und ist in diesem Ausführungsbeispiel senkrecht zu der Längslinie 7' orientiert.

Die Krümmungsrichtung 12 liegt somit in diesem Ausführungsbeispiel auf einer Achse 13 des Querschnitts 8. In diesem Ausführungsbeispiel hat der Querschnitt 8 entlang der Achse 13 ein maximales Außenmaß D.

Fig. 2 zeigt den Querschnitt 8 des rohrförmigen Grundkörpers 2 der in Fig. 1 dargestellten Komponente 1 an der Längsbiegung 6 entsprechend einer möglichen Ausgestaltung zur Erläuterung der Erfindung. Der rohrförmige Grundkörper 2 weist einen Innenraum 14 auf, durch den beispielsweise ein Brennstoff entlang der Längslinie 7' geführt werden kann. Die Achse 13, in der das maximale Außenmaß D liegt, und eine Achse 15, in der ein minimales Außenmaß d liegt, schneiden sich hier auf der Längslinie 7'. Ferner sind die beiden Achsen 13, 15, auf denen die Außenmaße d, D liegen, in diesem Ausführungsbeispiel senkrecht zueinander orientiert.

Eine Ovalität x wird hier als Prozentwert betrachtet. Die Berechnung der Ovalität x ergibt sich hierbei gemäß der in den Zeichnungen dargestellten

### Formel (1)

aus einem Bruchteilswert. Der Dividend dieses Bruchteilswertes ergibt sich aus dem Multiplikationsfaktor 2 und dem Betragswert der Differenz zwischen dem maximalen Außenmaß D und dem minimalen Außenmaß d. Der Divisor ergibt sich aus der Summe des maximalen Außenmaßes D und des minimales Außenmaßes d. Zur Verdeutlichung, dass die Ovalität x hier als Prozentwert betrachtet wird, kann dieser Bruchteilswert noch mit 100 % multipliziert werden, wie es in der Formel (1) angegeben ist.

Im Grenzfall einer kreisförmigen Außenkontur ist das maximale Außenmaß D gleich dem minimalen Außenmaß d, so dass die Ovalität x verschwindet.

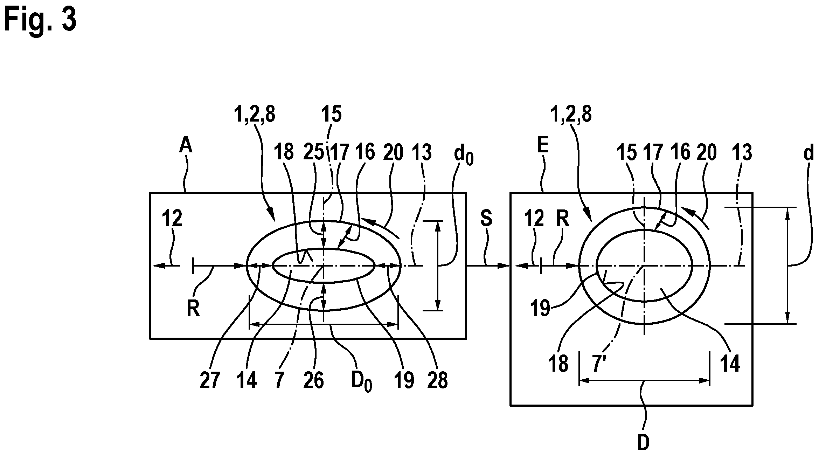

Fig. 3 zeigt einen Prozessablauf in einer schematischen Darstellung zur Erläuterung der Erfindung. Hierbei sind zur Vereinfachung ein Ausgangszustand A und ein Endzustand E dargestellt. Ein Prozessschritt S des Verfahrens zur Herstellung der Komponente 1 der Brennstoffeinspritzanlage weist zumindest einen Verfahrensschritt auf, bei dem ein rohrförmiger Abschnitt 5 des Grundkörpers 2 entlang der Längslinie 7 des rohrförmigen Abschnitts 5 zum Ausgestalten einer Längsbiegung 6 gebogen wird.

Das Verfahren zur Herstellung der Komponente 1 betrifft außerdem den Ausgangszustand A vor der Ausgestaltung der Längsbiegung 6. Im Ausgangszustand A kann der rohrförmige Grundkörper 2 sich beispielsweise entlang der in Fig. 1 gezeigten Längslinie 7 erstrecken. Ein Biegeradius R und der Biegewinkel 10 beziehungsweise der Öffnungswinkel 11 sind bereits vor dem Prozessschritt S festgelegt. Ein weiterer Parameter ist der gewünschte Materialeinsatz, der hier ebenfalls festgelegt sei und eine Randbedingung darstellt. Ein höherer Materialeinsatz ermöglicht für sich eine höhere Festigkeit und somit eine zusätzlich Beeinflussung. Bei der nachfolgenden Erläuterung wird der Materialeinsatz jedoch als bereits festgelegt angenommen.

Der Querschnitt 8 wird in diesem Ausführungsbeispiel aus einer ovalen Grundform entwickelt. Eine exemplarisch gekennzeichnete Wandstärke 16 wird über den Umfang variiert. Ferner werden ein anfängliches maximales Außenmaß D₀ und ein anfängliches minimales Außenmaß d₀ modelliert. Die ovale Ausgangsform des Querschnitts kann beispielsweise durch eine elliptische Außenkontur 17 begrenzt sein. Eine den Innenraum 14 begrenzende Wand 18 kann durch eine elliptische Innenkontur 19 modelliert sein. Hierbei versteht es sich, dass zusätzlich eine Variation des Querschnitts 8 entlang der Längslinie 7 möglich ist. Insbesondere kann der rohrförmige Grundkörper 2 außerhalb der Längsbiegung 6 hohlzylinderförmig ausgestaltet sein.

Durch eine Modellrechnung und/oder durch Versuche können insbesondere das anfängliche maximale Außenmaß D₀, das anfängliche minimale Außenmaß d₀ und die Variation der Wandstärke 16 in einer Umfangsrichtung 20 so bestimmt werden, dass im Endzustand E eine gewünschte Ausgestaltung und insbesondere eine reduzierte Ovalität x und/oder eine durch einen bestimmten Wert begrenzte Ovalität x erzielt sind.

Hierfür ist in diesem Ausführungsbeispiel im Ausgangszustand A die Achse 13, in der das anfängliche maximale Außenmaß D₀ und nach dem Prozessschritt S auch das maximale Außenmaß D liegen, entlang der Krümmungsrichtung 12 orientiert. Die Achse 15, in der das anfängliche minimale Außenmaß d₀ und nach dem Prozessschritt S auch das minimale Außenmaß d liegen, ist hier senkrecht zu der Krümmungsrichtung 12 beziehungsweise senkrecht zu der Achse 13 vorgegeben.

Außerdem ist eine Variation der Wandstärke 16 über den Umfang, das heißt in der Umfangsrichtung 20, realisiert. Hierbei ist eine stetige und hier auch kontinuierliche Variation der Wandstärke 16 realisiert. Stetig bedeutet hierbei, dass in der Umfangsrichtung 20 betrachtet keine sprunghaften Änderungen der Wandstärke 16 realisiert sind. Die gleichmäßige Änderung der Wandstärke 16 über den Umfang vermeidet Spannungsspitzen.

Außerdem ergeben sich auf der Achse 15 zwei sich gegenüberliegende maximale Wandstärken 25, 26, die hier gleich groß sind. Ferner ergeben sich zwei sich gegenüberliegende minimale Wandstärken 27, 28 auf der Achse 13.

Auf diese Weise kann bei gegebenem Materialeinsatz eine optimierte Festigkeit der Komponente 1 nach dem Prozessschritt S erreicht werden. Hierbei wird in diesem Ausführungsbeispiel eine zumindest näherungsweise verschwindende Ovalität x im Endzustand E erreicht. Da der Materialeinsatz direkt das Bauteilgewicht der Komponente 1 beeinflusst, kann das Verfahren auch in der Weise gesehen werden, dass in Bezug auf eine gewünschte Festigkeit eine Optimierung des Bauteilgewichts durch einen möglichst geringen Materialeinsatz erfolgt. Bei dieser Betrachtung wird der Prozessparameter Materialeinsatz so weit reduziert, bis bei optimierter Geometrie im Endzustand E gerade noch die erforderliche Festigkeit erreicht ist.

Außerdem ermöglicht eine geringere Wandstärke 16 eine höhere Flexibilität, so dass auch diesbezüglich eine Optimierung möglich ist. Hierbei führt in der Regel eine geringere Wandstärke 16 nach dem Prozessschritt S zu einer größeren Ovalität x. Deshalb können mit anderen Wandstärken 16, insbesondere geringeren Wandstärken 16, andere Ausgangsgeometrien erforderlich sein, die sich beispielsweise in den anfänglichen Außenmaßen d₀, D₀ und der Variation der Wandstärke 16 über den Umfang unterscheiden.

Somit können die Festigkeit und Haltbarkeit des rohrförmigen Grundkörpers 2 auf unterschiedliche Weise beeinflusst werden. Durch eine lokal begrenzte oder auch entlang der gesamten Längslinie 7 erfolgenden Verformung des Querschnitts 8 kann im Ausgangszustand A insbesondere ein Querschnitt 8 realisiert werden, bei dem die Ovalität x im Ausgangszustand A entgegengesetzt zu der über den Prozessschritt S erfolgenden Veränderung und der erzielten Ovalität x im Endzustand E ist, um die Festigkeit zu verbessern.

Im Hinblick auf die Ovalität x im Endzustand E, die sich aus der entsprechenden Biegung eine hohlzylinderförmigen Körpers ergibt, kann somit eine Reduzierung der Ovalität x erzielt werden. Ferner kann eine Ovalität x im Endzustand E erzielt werden, die kleiner als 8 %, vorzugsweise kleiner als 5 %, ist. Wesentliche Vorteile ergeben sich besonders bei einem Biegewinkel 10 von mehr als 90° und/oder einem Biegeradius R beziehungsweise bei Krümmungsradien von weniger als 20 mm.

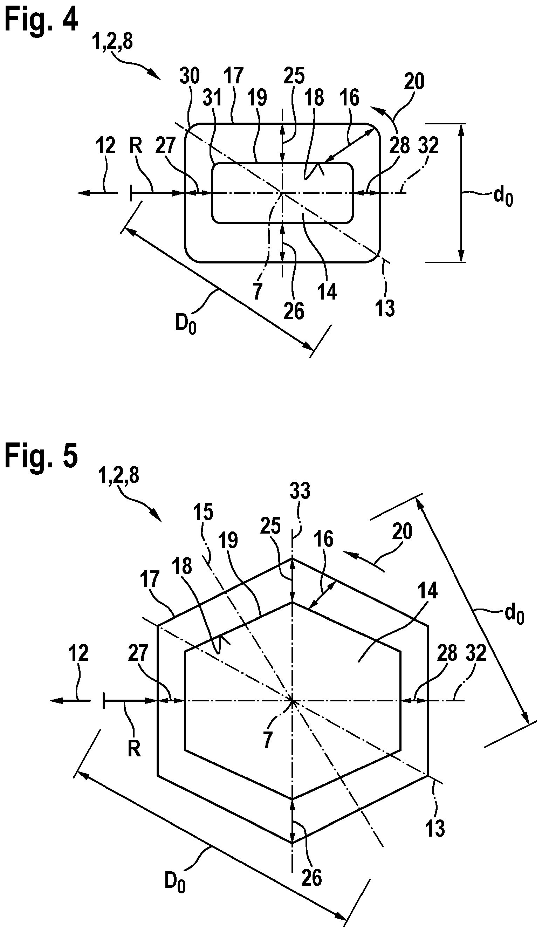

Fig. 4 zeigt einen Querschnitt 8 des in Fig. 1 dargestellten rohrförmigen Grundkörpers 2 der Komponente 1 entsprechend einer weiteren möglichen Ausgestaltung der Erfindung. Hierbei ist die Ausgestaltung in einem Ausgangszustand A dargestellt, die entsprechend dem in Fig. 3 veranschaulichten Prozessablauf vorgegeben ist. Bei diesem Ausführungsbeispiel wird der Querschnitt 8 ausgehend von einem rechteckigem Hohlprofil modelliert. Hierbei sind sowohl an der Außenkontur 17 als auch an der Innenkontur 19 Kantenverrundungen 30, 31 vorgesehen, von denen in der Fig. 4 exemplarisch die Kantenverrundungen 30, 31 gekennzeichnet sind. Hierdurch ergibt sich eine stetige Variation der Wandstärke 16 in der Umfangsrichtung 20. Die Wandstärke 16 wird hierbei in Bezug auf die Längslinie 7 betrachtet. Auch in diesem Ausführungsbeispiel sind die maximalen Wandstärken 25, 26 im Ausgangszustand A auf der Achse 15 vorgegeben, in der das anfängliche minimale Außenmaß d₀ liegt. Die minimalen Wandstärken 27, 28 liegen auf einer Achse 32, die sich entlang der Krümmungsrichtung 12 erstreckt. Die Achse 13, in der das anfängliche maximale Außenmaß D₀ liegt, ist in diesem Ausführungsbeispiel nicht senkrecht zu der Achse 15, in der das anfängliche minimale Außenmaß d₀ liegt. Entsprechendes ergibt sich dann im Endzustand E.

Fig. 5 zeigt einen Querschnitt 8 des in Fig. 1 dargestellten rohrförmigen Grundkörpers 2 der Komponente 1 entsprechend einer weiteren möglichen Ausgestaltung. In diesem Ausführungsbeispiel wird der Querschnitt 8 aus einem hexagonalen Hohlkörperprofil ausgeformt. Die hexagonale Struktur ist hierbei sowohl für die Außenkontur 17 als auch für die Innenkontur 19 vorgegeben. Die maximalen Wandstärken 25, 26 ergeben sich hierbei auf einer Achse 33, die senkrecht zu der Krümmungsrichtung 12 ist. Die minimalen Wandstärken 27, 28 ergeben sich auf einer Achse 32, die entlang der Krümmungsrichtung 12 orientiert ist. Die Achse 15, in der das anfängliche minimale Außenmaß d₀ liegt, und die Achse 13, in der das anfängliche maximale Außenmaß D₀ liegt, ist hierbei jeweils nicht mit der Achse 32 beziehungsweise der Achse 33 deckungsgleich. Allerdings sind die Achsen 32, 33 senkrecht zueinander orientiert.

Als Werkstoff beziehungsweise Material für den rohrförmigen Grundkörper 2 können nicht nur Stähle, wie Kohlenstoffstähle oder rostfreie Stähle, sondern auch andere Werkstoffe zum Einsatz kommen. Beispielsweise eignen sich auch andere Metalle. Im jeweiligen Anwendungsfall können auch auf Kunststoff basierende Werkstoffe oder geeignete Verbundwerkstoffe zum Einsatz kommen.

Die Erfindung ist nicht auf die beschriebenen Ausführungsbeispiele beschränkt.

## Patentansprüche

1. Komponente (1) für eine Brennstoffeinspritzanlage, insbesondere eine Hochdruck-Brennstoffeinspritzanlage, mit einem Grundkörper (2), der zumindest abschnittsweise rohrförmig ausgestaltet ist,
wobei der Grundkörper (2) zumindest einen rohrförmigen Abschnitt (5) aufweist, und der rohrförmige Abschnitt (5) eine Längslinie (7') aufweist, die Querschnitte (8) des rohrförmigen Abschnitts (5) senkrecht durchstößt,
und der rohrförmige Abschnitt (5) entlang der Längslinie (7') mit einer Längsbiegung (6) ausgestaltet ist und
der Grundkörper (2) zumindest an der Längsbiegung (6) des rohrförmigen Abschnitts (5) so ausgestaltet ist, dass eine Ovalität (x) der Querschnitte (8) des rohrförmigen Abschnitts (5) an der Längsbiegung (6) reduziert und/oder kleiner als 8 % ist,
**dadurch gekennzeichnet,**
**dass** eine Wandstärke (16) des rohrförmigen Abschnitts (5) im Ausgangszustand vor dem Einbringen der Längsbiegung (6) für jeden der Querschnitte (8) des rohrförmigen Abschnitts (5) auf einer Achse (15, 33), die senkrecht zu der dortigen Krümmungsrichtung (12) der Längsbiegung (6) ist, größer als auf einer Achse (13, 32) entlang der dortigen Krümmungsrichtung (12) entlang der Längsbiegung (6) ist.

2. Komponente nach Anspruch 1,
**dadurch gekennzeichnet,**
**dass** für jeden der Querschnitte (8) des rohrförmigen Abschnitts (5) an der Längsbiegung (6) eine Achse (15, 33), entlang der der jeweilige Querschnitt (8) ein maximales Außenmaß (D) aufweist, zumindest näherungsweise in einer dortigen Krümmungsrichtung (12) der Längsbiegung (6) orientiert ist.

3. Komponente nach Anspruch 1 oder 2,
**dadurch gekennzeichnet,**
**dass** für jeden der Querschnitte (8) des rohrförmigen Abschnitts (5) an der Längsbiegung (6) eine Achse (13, 32), entlang der der jeweilige Querschnitt (8) ein minimales Außenmaß (d) aufweist, zumindest näherungsweise senkrecht zu einer dortigen Krümmungsrichtung (12) der Längsbiegung (6) orientiert ist.

4. Komponente nach einem der Ansprüche 1 bis 3,
**dadurch gekennzeichnet,**
**dass** für jeden der Querschnitte (8) des rohrförmigen Abschnitts (5) an der Längsbiegung (6) eine Achse (15, 33), entlang der der jeweilige Querschnitt (8) ein maximales Außenmaß (D) aufweist, zumindest näherungsweise senkrecht zu einer Achse (13, 32) orientiert ist, entlang der der jeweilige Querschnitt (8) ein minimales Außenmaß (d) aufweist.

5. Komponente nach einem der Ansprüche 1 bis 4,
**dadurch gekennzeichnet,**
**dass** eine Ovalität (x) der Querschnitte (8) des rohrförmigen Abschnitts (5) an der Längsbiegung (6) kleiner als 5 % ist.

6. Komponente nach einem der Ansprüche 1 bis 5,
**dadurch gekennzeichnet,**
**dass** ein Biegewinkel (10), um den die Längsbiegung (6) des rohrförmigen Abschnitts (5) gebogen ist, größer als 90° ist und/oder dass Krümmungsradien (R) oder der Biegeradius (R) der Längsbiegung (6) des rohrförmigen Abschnitts (5) kleiner als 20 mm sind.

7. Komponente nach einem der Ansprüche 1 bis 6,
**dadurch gekennzeichnet,**
**dass** eine Wandstärke (16) des rohrförmigen Abschnitts (5) im Ausgangszustand vor dem Einbringen der Längsbiegung (6) für jeden der Querschnitte (8) des rohrförmigen Abschnitts (5) von einer Achse (15, 33), die senkrecht zu der dortigen Krümmungsrichtung (12) der Längsbiegung (6) ist, in und/oder entgegen der Krümmungsrichtung (12) kontinuierlich bis zu einer Achse (13, 32) entlang der dortigen Krümmungsrichtung (12) der Längsbiegung (6) abnimmt.

8. Komponente nach einem der vorhergehenden Ansprüche,
**dadurch gekennzeichnet,**
**dass** der Werkstoff für den Grundkörper (2) ein metallischer ist.

9. Verfahren zum Herstellen einer Komponente (1) einer Brennstoffeinspritzanlage, insbesondere einer Hochdruck-Brennstoffeinspritzanlage, wobei an der Komponente (1) ein zumindest abschnittsweise rohrförmiger Grundkörper (2) ausgeformt wird, wobei zumindest ein rohrförmiger Abschnitt (5) des Grundkörpers (2) entlang einer Längslinie (7) des rohrförmigen Abschnitts (5), wobei die Längslinie (7) die Querschnitte (8) des rohrförmigen Abschnitts (5) senkrecht durchstößt, zum Ausgestalten einer Längsbiegung (6) gebogen wird, **dadurch gekennzeichnet dass** der rohrförmige Abschnitt (5) vor dem Ausgestalten der Längsbiegung (6) so ausgeformt wird, dass für jeden der Querschnitte (8) des rohrförmigen Abschnitts (5) an der auszugestaltenden Längsbiegung (6) maximale Wandstärken (25, 26) zumindest näherungsweise auf einer senkrecht zu der dortigen Krümmungsrichtung (12) der Längsbiegung (6) orientierten Achse (15, 33) und minimale Wandstärken (27, 28) zumindest näherungsweise auf einer entlang der dortigen Krümmungsrichtung (12) der Längsbiegung (6) orientierten Achse (13, 32) liegen.

10. Komponente (1), die gemäß einem Verfahren nach Anspruch 9 hergestellt ist.

## Claims

1. Component (1) for a fuel injection system, in particular a high-pressure fuel injection system, having a main body (2) which is of tubular configuration at least in certain portions,
wherein the main body (2) has at least one tubular portion (5), and the tubular portion (5) has a longitudinal line (7') which extends perpendicularly through the cross sections (8) of the tubular portion (5),
and the tubular portion (5) is configured with a longitudinal bend (6) along the longitudinal line (7'), and
the main body (2) is, at least at the longitudinal bend (6) of the tubular portion (5), configured such that an ovality (x) of the cross sections (8) of the tubular portion (5) at the longitudinal bend (6) is reduced and/or is less than 8%,
**characterized**
**in that** a wall thickness (16) of the tubular portion (5) in the initial state prior to the introduction of the longitudinal bend (6) is, for each of the cross sections (8) of the tubular portion (5), greater on an axis (15, 33) which is perpendicular to the local curvature direction (12) of the longitudinal bend (6) than on an axis (13, 32) along the local curvature direction (12) along the longitudinal bend (6).

2. Component according to Claim 1,
**characterized**
**in that**, for each of the cross sections (8) of the tubular portion (5) at the longitudinal bend (6), an axis (15, 33) along which the respective cross section (8) has a maximum external dimension (D) is oriented at least approximately in a local curvature direction (12) of the longitudinal bend (6).

3. Component according to Claim 1 or 2,
**characterized**
**in that**, for each of the cross sections (8) of the tubular portion (5) at the longitudinal bend (6), an axis (13, 32) along which the respective cross section (8) has a minimum external dimension (d) is oriented at least approximately perpendicular to a local curvature direction (12) of the longitudinal bend (6).

4. Component according to any of Claims 1 to 3,
**characterized**
**in that**, for each of the cross sections (8) of the tubular portion (5) at the longitudinal bend (6), an axis (15, 33) along which the respective cross section (8) has a maximum external dimension (D) is oriented at least approximately perpendicular to an axis (13, 32) along which the respective cross section (8) has a minimum external dimension (d).

5. Component according to any of Claims 1 to 4,
**characterized**
**in that** an ovality (x) of the cross sections (8) of the tubular portion (5) at the longitudinal bend (6) is less than 5%.

6. Component according to any of Claims 1 to 5,
**characterized**
**in that** a bend angle (10) through which the longitudinal bend (6) of the tubular portion (5) is bent is greater than 90°, and/or in that curvature radii (R) or the bend radius (R) of the longitudinal bend (6) of the tube portion (5) are less than 20 mm.

7. Component according to any of Claims 1 to 6,
**characterized**
**in that** a wall thickness (16) of the tubular portion (5) in the initial state prior to the introduction of the longitudinal bend (6), for each of the cross sections (8) of the tubular portion (5), decreases continuously in and/or counter to the curvature direction (12) from an axis (15, 33) which is perpendicular to the local curvature direction (12) of the longitudinal bend (6) as far as an axis (13, 32) along the local curvature direction (12) of the longitudinal bend (6).

8. Component according to any of the preceding claims,
**characterized**
**in that** the material for the main body (2) is a metallic material.

9. Method for producing a component (1) of a fuel injection system, in particular of a high-pressure fuel injection system, wherein a main body (2) which is tubular at least in certain portions is formed on the component (1), wherein at least one tubular portion (5) of the main body (2) is bent along a longitudinal line (7) of the tubular portion (5), the longitudinal line (7) extending perpendicularly through the cross sections (8) of the tubular portion (5), in order to configure a longitudinal bend (6), **characterized in that**, prior to the configuration of the longitudinal bend (6), the tubular portion (5) is formed such that, for each of the cross sections (8) of the tubular portion (5) at the longitudinal bend (6) to be formed, maximum wall thicknesses (25, 26) lie at least approximately on an axis (15, 33) oriented perpendicular to the local curvature direction (12) of the longitudinal bend (6) and minimum wall thicknesses (27, 28) lie at least approximately on an axis (13, 32) which is oriented along the local curvature direction (12) of the longitudinal bend (6).

10. Component (1) which is produced in accordance with the method according to Claim 9.

## Revendications

1. Composant (1) pour une installation d'injection de carburant, en particulier une installation d'injection de carburant à haute pression, comprenant un corps de base (2) qui est configuré au moins en partie sous forme tubulaire,
le corps de base (2) présentant au moins une portion de forme tubulaire (5) et la portion de forme tubulaire (5) présentant une ligne longitudinale (7') qui traverse perpendiculairement des sections transversales (8) de la portion de forme tubulaire (5),
et la portion de forme tubulaire (5) étant configurée le long de la ligne longitudinale (7') avec une courbure longitudinale (6), et
le corps de base (2) étant configuré au moins au niveau de la courbure longitudinale (6) de la portion tubulaire (5) de telle sorte qu'une ovalisation (x) des sections transversales (8) de la portion de forme tubulaire (5) soit réduite et/ou soit inférieure à 8 % au niveau de la courbure longitudinale (6),
**caractérisé en ce**
**qu'**une épaisseur de paroi (16) de la portion de forme tubulaire (5), dans l'état initial avant l'introduction de la courbure longitudinale (6) pour chacune des sections transversales (8) de la portion de forme tubulaire (5), sur un axe (15, 33) qui est perpendiculaire à la direction de la courbe (12) à cet endroit de la courbure longitudinale (6), est plus grande que sur un axe (13, 32) le long de la direction de la courbe (12) à cet endroit le long de la courbure longitudinale (6) .

2. Composant selon la revendication 1,
**caractérisé en ce que**
pour chacune des sections transversales (8) de la portion de forme tubulaire (5) au niveau de la courbure longitudinale (6), un axe (15, 33) le long duquel la section transversale respective (8) présente une dimension extérieure maximale (D), est orienté au moins approximativement dans une direction de la courbe (12) à cet endroit de la courbure longitudinale (6).

3. Composant selon la revendication 1 ou 2,
**caractérisé en ce que**
pour chacune des sections transversales (8) de la portion de forme tubulaire (5) au niveau de la courbure longitudinale (6), un axe (13, 32) le long duquel la section transversale respective (8) présente une dimension extérieure minimale (d), est orienté au moins approximativement perpendiculairement à une direction de la courbe (12) à cet endroit de la courbure longitudinale (6) .

4. Composant selon l'une quelconque des revendications 1 à 3,
**caractérisé en ce que**
pour chacune des sections transversales (8) de la portion de forme tubulaire (5) au niveau de la courbure longitudinale (6), un axe (15, 33) le long duquel la section transversale respective (8) présente une dimension extérieure maximale (D), est orienté au moins approximativement perpendiculairement à un axe (13, 32) le long duquel la section transversale respective (8) présente une dimension extérieure minimale (d).

5. Composant selon l'une quelconque des revendications 1 à 4,
**caractérisé en ce**
**qu'**une ovalisation (x) des sections transversales (8) de la portion de forme tubulaire (5) au niveau de la courbure longitudinale (6) est inférieure à 5 %.

6. Composant selon l'une quelconque des revendications 1 à 5,
**caractérisé en ce**
**qu'**un angle de courbure (10) autour duquel la courbure longitudinale (6) de la portion de forme tubulaire (5) est courbée, est supérieur à 90° et/ou **en ce que** des rayons de courbure (R) ou le rayon de courbure (R) de la courbure longitudinale (6) de la portion de forme tubulaire (5) est/sont inférieur(s) à 20 mm.

7. Composant selon l'une quelconque des revendications 1 à 6,
**caractérisé en ce**
**qu'**une épaisseur de paroi (16) de la portion de forme tubulaire (5) dans l'état initial avant l'introduction de la courbure longitudinale (6) pour chacune des sections transversales (8) de la portion de forme tubulaire (5) diminue en continu depuis un axe (15, 33) qui est perpendiculaire à la direction de la courbe (12) à cet endroit de la courbure longitudinale (6), dans, et/ou dans le sens opposé à, la direction de la courbe (12) jusqu'à un axe (13, 32) le long de la direction de courbe (12) à cet endroit de la courbure longitudinale (6).

8. Composant selon l'une quelconque des revendications précédentes,
**caractérisé en ce que**
le matériau pour le corps de base (2) est métallique.

9. Procédé de fabrication d'un composant (1) d'une installation d'injection de carburant, en particulier d'une installation d'injection de carburant à haute pression, dans lequel un corps de base au moins en partie de forme tubulaire (2) est formé au niveau du composant (1),
dans lequel au moins une portion de forme tubulaire (5) du corps de base (2) est courbée pour former une courbure longitudinale (6) le long d'une ligne longitudinale (7) de la portion de forme tubulaire (5), la ligne longitudinale (7) traversant perpendiculairement les sections transversales (8) de la portion de forme tubulaire (5),
**caractérisé en ce que**
la portion de forme tubulaire (5), avant la configuration de la courbure longitudinale (6), est formée de telle sorte que pour chacune des sections transversales (8) de la portion de forme tubulaire (5) au niveau de la courbure longitudinale (6) à configurer, des épaisseurs de paroi maximales (25, 26) soient situées au moins approximativement sur un axe (15, 33) orienté perpendiculairement à la direction de la courbe (12) à cet endroit de la courbure longitudinale (6) et des épaisseurs de paroi minimales (27, 28) soient situées au moins approximativement sur un axe (13, 32) orienté le long de la direction de la courbe (12) à cet endroit de la courbure longitudinale (6).

10. Composant (1) fabriqué selon un procédé selon la revendication 9.
